Europäisches Patentamt

European Patent Office

Office européen des brevets

(11) Publication number: **0 428 111 A2**

## (12) EUROPEAN PATENT APPLICATION

(21) Application number: **90121638.2**

(51) Int. Cl.5: **G06F 13/28**

(22) Date of filing: **12.11.90**

(30) Priority: **14.11.89 JP 295576/89**

(43) Date of publication of application:
**22.05.91 Bulletin 91/21**

(84) Designated Contracting States:
**DE FR GB IT**

(71) Applicant: **HITACHI, LTD.**
**6, Kanda Surugadai 4-chome**
**Chiyoda-ku, Tokyo 100(JP)**

Applicant: **HITACHI MICROCOMPUTER**
**SYSTEM LTD.**
**5-22-1, Josuihon-cho**

**Kodaira-shi, Tokyo(JP)**

(72) Inventor: **Tsukamoto, Takashi**
**101, K-kohpo, 85-1, Naka-machi**
**Kodaira-shi, Tokyo(JP)**
Inventor: **Matsuda, Mamoru**
**849-15, Yamada-cho**
**Ohmachi-shi, Nagano(JP)**

(74) Representative: **Strehl, Peter, Dipl.-Ing.**
**Patentanwälte Strehl Schübel-Hopf Groening**
**Maximilianstrasse 54 Postfach 22 14 55**
**W-8000 München 22(DE)**

(54) Data transfer control method and data processor using the same.

(57) A direct memory access controller and a single-chip microcomputer include plural pairs of address registers (6, 7) each of which is composed of a source address register (6a, 6b) for holding a source address and a destination address register (7a, 7b) for holding a destination address. Moreover, the direct memory access controller and microcomputer further include a transfer count register (3) and a control register (2) for designating a transfer mode. The control register (2) contains control bits (or flag bits) for discriminating transfer modes. The control bits have a set status ("1"), in which they designate the data transfer according to the present invention, and a cleared status ("0"), in which they designate the conventional data transfer.

FIG. 1

## DATA TRANSFER CONTROL METHOD AND DATA PROCESSOR USING THE SAME

BACKGROUND OF THE INVENTION

The present invention relates to a data transfer control technology and, more particularly, a technology which is effective when applied to a data transfer system between a memory and a input/output (I/O) device, such as a technology which is effective when applied to a single-chip microcomputer or a direct memory access (DMA) controller.

In a data processor system, there is provided a direct memory access (DMA) controller as a device which makes it possible to transfer data between the input/output devices (I/O) directly not through a central processing unit (CPU).

As the DMA controller, there have been a variety of systems, as is disclosed in JP-A-59-53928, JP-A-61-198351, JP-A-63-29868, JP-A-63-163560 and JP-A-1-50154. In the DMA transfer system, as disclosed in those Japanese Patent Laid-Open Publications, the data transfers are consecutively executed by a number corresponding to the data of transfer word count stored in a transfer word count (e.g., transfer count or length) register in response to one transfer request.

SUMMARY OF THE INVENTION

An object of the present invention is to provide a data transfer method having an improved transfer efficiency.

Another object of the present invention is to provide a direct memory access controller and a single-chip microcomputer which are enabled to realize the data transfer method having an improve transfer efficiency.

The aforementioned and other objects and novel features of the present invention will become apparent from the following description to be made with reference to the accompanying drawings.

The summary of the representatives of the invention to be disclosed herein will be described in the following.

Specifically, the data transfer method of the present invention is one capable of realizing data transfer of a value of integer times as large as that set in a transfer count register. If the number of 10 according to the decimal notation is set in a transfer count register, for example, data of 10 x n (n: an integer) can be transferred.

In order to realize such transfer method, the direct memory access controller and the single-chip microcomputer include plural pairs of address registers, each of which is composed of a source address register for holding a source address and a destination address register for holding a destination address. Moreover, the direct memory access controller and microcomputer further include a transfer count register and a control register for designating a transfer mode. This control register contains control bits (or flag bits) for discriminating transfer modes. The control bits have a set status ("1"), in which they designate the data transfer according to the present invention, and a cleared status ("0"), in which they designate the conventional data transfer. The individual registers described above can be either constructed of static flip-flop circuits or assigned to predetermined addresses in a semiconductor memory.

The data transfer method according to the present invention is exemplified in the following. In order to simplify the description, it is assumed that the direct memory access controller includes first and second source address registers, first and second destination address registers, a transfer count register and a control register. If the direct memory access controller receives a data transfer request, for example, the first data to be transferred are read out from the address of a semiconductor memory, which is indicated by first source address data set in the first source address register, and the first source address data are updated. Next, the first data are written in the first data register, which is indicated by the first destination address data set in the first destination address register, and the first destination address data are updated. After this, the status of the transfer mode designating control bits in the control register is examined.

If the aforementioned control bits are in the set status, the second data to be transferred from the address of the semiconductor memory, which is indicated by the second destination address data in the second source address register, and the second source address data are updated. Next, the second data are written in the second data register, which is indicated by the second destination address data set in the second destination address register, and the second destination address data are updated. Moreover, the values of the count data set in the aforementioned transfer count register are decremented by 1, and the

EP 0 428 111 A2

procedure transfers to a next data transfer.

If the control bits are in the cleared status, the data transfers based upon the second destination address register and the second source address register are not carried out, but the values of the count data set in the transfer count register are decremented by 1, and the procedure transfers to a next data transfer. Incidentally, this data transfer is identical to the conventional one.

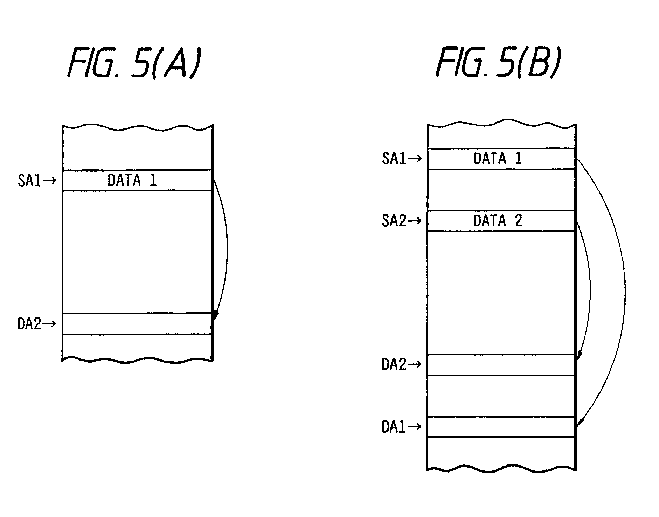

As shown in Fig. 5(B), therefore, two data DATA1 and DATA2, which are in a memory address space and in address positions apart from each other, can be transferred in response to one transfer request. As a result, the DMA transfer can be utilized in the complicated control of the peripheral I/O such as ports.

When predetermined waveform pulses are to be outputted from the output port of the single-chip microcomputer, for example, their outputs can be realized by writing the data periodically in the data resistor of the output port by the use of the DMA transfer of the present invention. For the request of such DMA transfer, a request for a timer interrupt is used. In this case, in response to one transfer request from the timer, the DMA controller is required to write the data in the packaged register of the output port and to reset the conditions including the flag clearing action of the timer. Thus, the data transfer method according to the present invention is effective.

## BRIEF DESCRIPTION OF THE DRAWINGS

Fig. 1 is a block diagram showing one embodiment of the present invention in case the invention is applied to a DMA controller;

Fig. 2 is a diagram showing an example of the structure of a control register of the DMA controller;

Fig. 3 is a block diagram showing one embodiment in case the present invention is applied to a single-chip microcomputer;

Fig. 4 is a flow chart showing a data transfer control procedure according to a micro-program;

Fig. 5(A) is a memory map showing a data transfer method by the conventional DMA controller;

Fig. 5(B) is a memory map showing a data transfer method according to the DMA controller of the present invention;

Fig. 6 is a block diagram showing the decrement timing of a count register in case a control bit FG1 is set to "0";

Fig. 7 is a block diagram showing the decrement timing of a count register in case a control bit FG1 is set to "1";

Fig. 8 is a block diagram showing the structure of a free running counter and a system to be controlled;

Fig. 9 is a schematic diagram showing the sequences of a data transfer; and

Fig. 10 is a waveform chart showing the operations of the data transfer of Fig. 9.

## DETAILED DESCRIPTION OF THE PREFERRED EMBODIMENTS

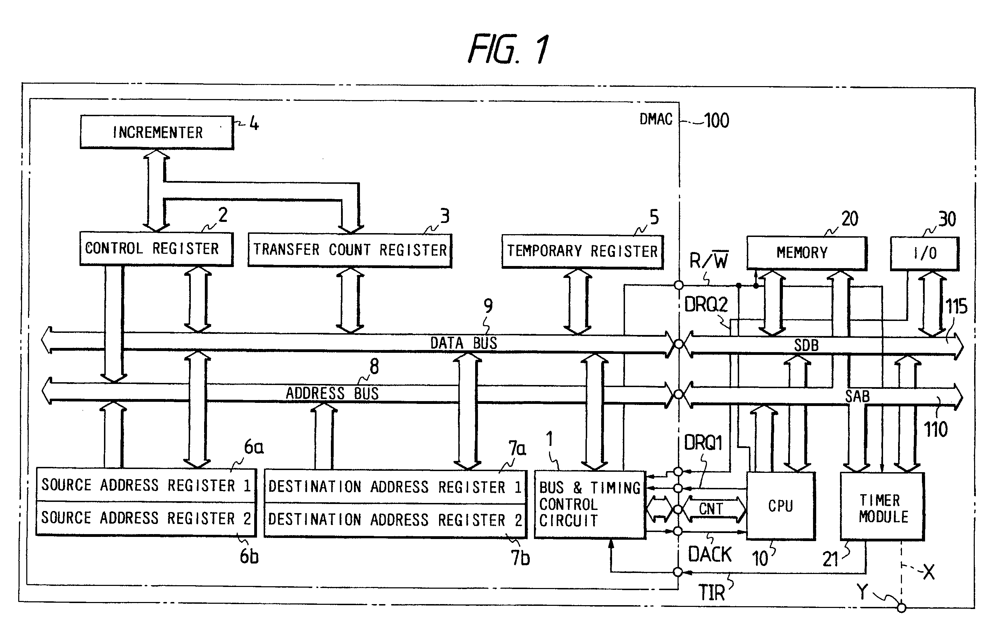

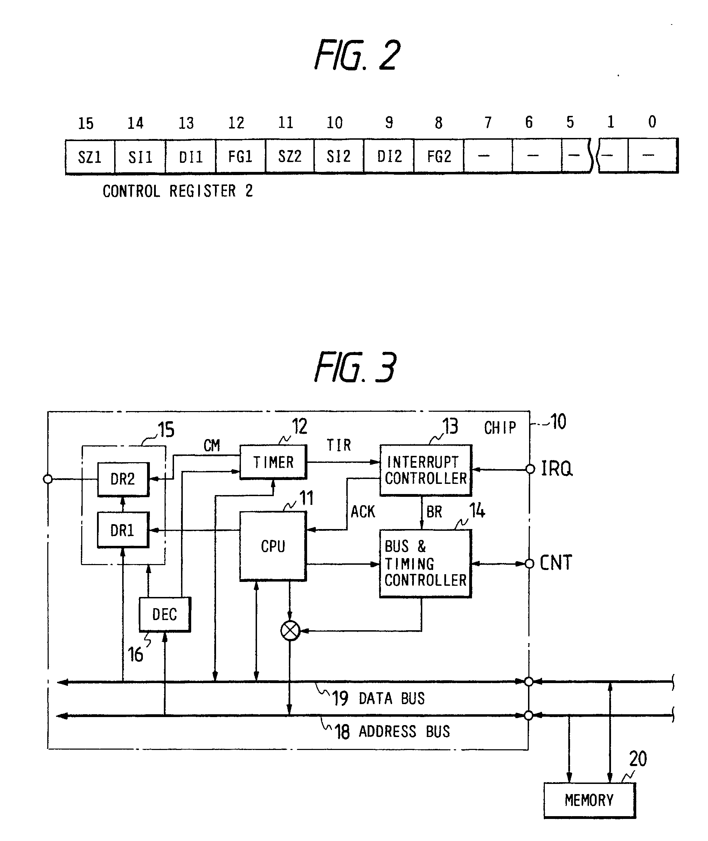

Fig. 1 shows a data processor system including a direct memory access controller (DMAC) according to the present invention.

The data processor system includes: a memory unit 20 for storing a program or data; a central processing unit (CPU) 10 for executing the program in the memory unit 20 to execute a predetermined data process; a timer module 21 for generating a time interval necessary for the data processor system; and a DMAC 100. These circuits 10, 20, 21 and 100 are linked through a system address bus (SAB) 110 and a system data bus (SDB) 115.

The DMAC 100 includes a bus & timing control cir cuit 1, a control register 2, a transfer count register 3, a incrementer 4, a temporary register 5, source address registers 6a and 6b, destination address registers 7a and 7b, an address bus 8 and a data bus 9.

The bus & timing control circuit 1 decides the priority of data transfer request signals DRQ1 and DRQ2 coming from an input/output (I/O) device 30 or an interrupt request signal TIR coming from a timer 21 and acquires a bus right from the CPU 10 acting as a bus master in accordance with the status of a control signal CNT to output an acknowledge signal DACK to the CPU 10 or the bus master. As a result, the DMAC 100 is brought into a data transfer starting status, when the bus right is acquired, and the bus & timing control circuit 1 starts the data transfer control. In other words, the bus & timing control circuit 1 has the function of a bus arbiter.

The control register 2 designates the data transfer modes or the size of the transfer data. The transfer count register 3 stores the number of transfers counted. The incrementer 4 updates (or increments or decrements) the transfer count or the transfer address. The temporary register 5 once holds the data read

3

out from the I/O device.

The aforementioned source address registers 6a and 6b are registers for assigning the individual addresses stored with the data to be transferred and can store different addresses.

The aforementioned destination address register 7a assigns the destination address of the data which are stored in the address assigned by the aforementioned source address register 6a. The aforementioned destination address register 7b assigns the destination address of the data which are stored in the address assigned by the aforementioned source address register 6b.

The aforementioned control register 2 is a 16-bit register and is constructed to contain the following control bits, as shown in Fig. 2.

A control bit SZ1 designates the size of data to be transferred, in the data transfer to be carried out by the use of the source address register 6a. If the control bit SZ1 is cleared to "0", data of 8 bits (or 1 byte) are stored in the address assigned by the address data in the destination register 7a. If the control bit SZ1 is set to "1", data of 16 bits (or 1 word) are stored in the address assigned by the content of the register 7a.

A control bit SI1 designates whether or not the address data stored in the source address register 6a are to be incremented. If the control bit SI1 is cleared to "0", the address data in the register 6a are not incremented, but the data transfer in the source address fixed mode is executed. If the control bit SI1 is set to "1" and if the aforementioned control bit SZ1 is cleared to "0", the address data in the register 6a are incremented by +1 by the incrementer 4 after the end of the data transfer. If the control bit SI1 is set to "1" and if the control bit SZ1 is set to "1", the address data in the register 6a are incremented by +2 by the incrementer 4 after the end of the data transfer.

A control bit DI1 designates whether or not the address data in the destination address register 6a are to be incremented. If the control bit DI1 is cleared to "0", the address data in the register 7a are not incremented, but the data transfer in the destination address fixed mode is executed. If the control bit DI1 is set to "1" and the control bit SZ1 is cleared to "0", the address data in the register 7a are incremented by +1 by the incrementer 4 after the end of the data transfer. If the control bit DI1 is set to "1" and if the control bit SZ1 is set to "1", the address data in the register 7a are incremented by +2 by the incrementer 4 after the end of the data transfer.

A control bit FG1 is a flag featuring the present invention for designating whether or not the data transfer based upon the source address register 6b and the destination address register 7b is to be executed after the end of the data transfer based upon the source address register 6a and the destination address register 7a.

A control bit SZ2 designates the size of data to be transferred, in the data transfer to be carried out by using the source register 6a. If the control bit SZ2 is cleared to "0", for example, data of 8 bits (or 1 byte) are stored in the address which is assigned by the address data in the destination register 7b. If the control bit SZ2 is set to "1", data of 16 bits (or 1 word) are stored in the address assigned by the content of the register 7b.

A control bit SI2 designates whether or not the address data stored in the source address register 6b are to be incremented. If the control bit SI2 is cleared to "0", the address data in the register 6b are not incremented, but the data transfer of the source address fixed mode is executed. If the control bit SI2 is set to "1" and if the aforementioned con trol bit SZ2 is cleared to "0", the address data in the register 6b are incremented by +1 by the incrementer 4 after the end of the data transfer. If the control bit SI2 is set to "1" and if the control bit SZ2 is set to "1", the address data in the register 6b are incremented by +2 by the incrementer 4 after the end of the data transfer.

A control bit DI2 designates whether or not the address data in the destination address register 7b are to be incremented. If the control bit DI2 is cleared to "0", the address data in the register 7b are not incremented, but the data transfer in the destination address fixed mode is executed. If the control bit DI2 is set to "1" and if the control bit SZ2 is cleared to "0", the address data in the register 7b are incremented by +1 by the incrementer 4 after the end of the data transfer. If the control bit DI2 is set to "1" and if the control bit SZ2 is set to "1", the address data in the register 7b are incremented by +2 by the incrementer 4 after the end of the data transfer.

The control bit FG2 is a flag featuring the present invention like the control bit FG1.

The cleared status "0" of the control bit FG1 defines execution of only the data transfer based upon the source address register 6a and the destination address register 7a. The set status "1" of the control bit FG1 defines execution of the data transfer based upon the source address register 6b and the destination address register 7b subsequent to the end of the data transfer based upon the source address register 6a and the destination address register 7a.

On the other hand, the cleared state "0" of a control bit FG2 defines shift of a subsequent process to

4

the data transfer based upon the source address register 6a and the destination address register 7a after the end of the data transfer based upon the source address register 6b and the destination address register 7b. The set status "1" of the control bit FG2 defines the data transfer based upon a third source address register and a third destination address register subsequent to the data transfer based upon the source address register 6b and the destination address register 7b in case the 7 bits to 5 bits of the control register 2, as shown in Fig. 2, are defined like the aforementioned control bits SZ1 (or SZ2), SI1 (or SI2) and DI1 (or DI2) and in case the third source address register and the third destination address register are disposed in the DMAC 100 of Fig. 1. In the DMAC 100 shown in Fig. 1, therefore, the set status "1" of the control bit FG2 is inhibited. In Fig. 2, the symbols "-" appearing at the 7 bits to the 0 bit of Fig. 2 indicate the unfixed status.

The decrement timing of the transfer count data stored in the aforementioned transfer count register 3 is controlled in accordance with the status of the aforementioned control bits FG1 and FG2. If the control bit FG1 is cleared to "0", the data transfer based upon the source address register 6a and the destination address register 7a is once carried out, and the aforementioned count data are then decremented by -1 by the incrementer 4. If the control bit FG1 is set to "1" and if the control bit FG2 is cleared to "0", the data transfer based upon the source and destination address registers 6a and 7a and the data transfer based upon the source and destination address registers 6b and 7b are consecutively carried out individually at one time, and the aforementioned count data are then decremented by -1 by the incrementer 4.

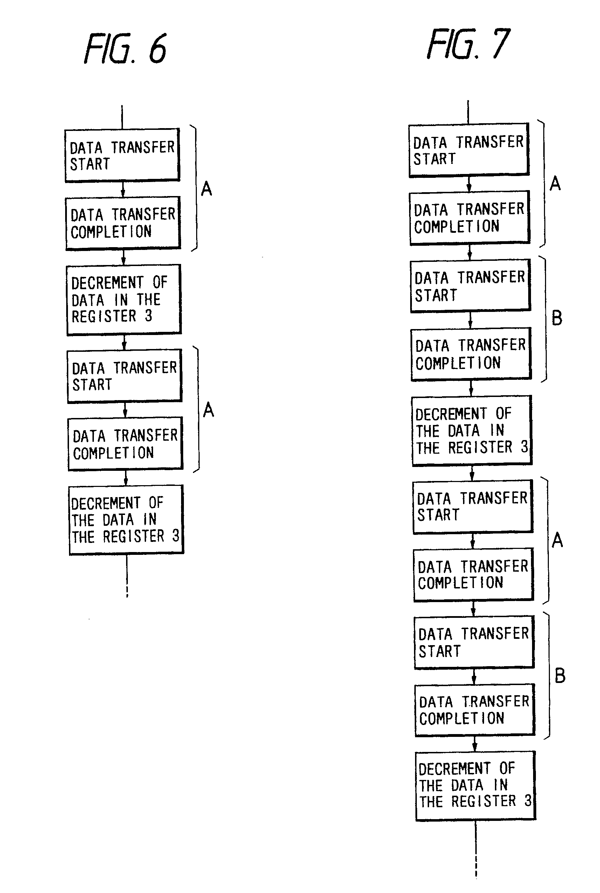

In case, therefore, the control bit FG1 is cleared to "0", the data in the transfer count register 3 are decremented at the timing, as shown in Fig. 6. Incidentally, the portions designated at A in Fig. 6 indicate the data transfer based upon the source and destination address registers 6a and 7a.

In case, on the other hand, the control bit FG1 is set to "1", the data in the transfer count register 3 are decremented at the timing, as shown in Fig. 7. In Fig. 7, the portions designated at A indicate the data transfer based upon the registers 6a and 7a, and the portions designated at B indicate the data transfer based upon the registers 6b and 7b.

The bus & timing control circuit 1 considers the statuses of the individual control bits of the control register 2, which are arranged in the array shown in Fig. 2, as control codes and decodes them sequentially from the lefthand to output control signals for operating the incrementer 4, the address registers 6a and 7a, and 6b and 7b, the temporary register 5 sequentially. As a result, the data transfers are executed.

Next, the operating procedures will be described in case the conventional data transfer, as shown in Fig. 5(A), and the data transfers between the independent addresses, as shown in Fig. 5(B), are to be executed by the aforementioned DMA controller 100.

In case these data transfers are to be executed, the CPU 10 writes the control register 2 of the DMA controller DMAC with the corresponding transfer mode in advance immediately before the transfer start or at the time of initialization and sets the transfer count in the transfer count register 3, source address data SA1 and SA2 in the address registers 6a and 6b, and destination address data DA1 and DA2 in the address registers 7a and 7b, respectively. Incidentally, since the registers 6b and 7b are not used in case of the data transfer, as shown in Fig. 5(A), the data SA2 and DA2 are not in the registers 6b and 7b.

The bus & timing control circuit 1 acquires the bus right from the bus master or CPU 10 when it receives the transfer request DRQ1 from the CPU 10 or the interrupt request TIR from the timer module 21. And, the bus & timing control circuit 1 reads and decodes the codes SZ1, SI1 and DI1 in the control register 2 sequentially from the lefthand. Then, the bus & timing control circuit 1 outputs the address data SA1 in the first source address register 6a to the address bus 8 and asserts a read/write signal R/W to a read status "H" to access the device (e.g., the memory 20 in this case) at the read side. As a result, the data DATA1 of 1 byte, for example, which is read out from the memory 20, are once stored in the temporary register 5 through the data bus 9. Next, the DMA controller outputs the address data DA1 from the first destination address register 7a to the address bus 8 and changes the read/write signal R/W into a write status "L". Then, the DMA controller accesses the data register in the timer module, for example, at the write side to output the data DATA1 from the temporary register 5 to the data bus 9. In accordance with the statuses of the control bits SI1 and DI1 of the control register 3, moreover, the address data SA1 and DA1 of the registers 6a and 7a are incremented or not. Thus, the first data transfer based upon the source and destination address registers 6a and 7a is ended.

Next, the bus & timing control circuit 1 examines the flag FG1 in the control register 2 to end the transfer if the flag FG1 is in the cleared status "0". Then, the count data in the register 3 is incremented by -1 by the incrementer 4 and is written in the register 3. As a result, the data transfer, as shown in Fig. 5(A), is executed. If the flag FG1 is set to "1", on the contrary, the next codes (e.g., SZ2, SI2 and DI2) of the flag FG1 are read out to start the second transfer. Specifically, the address SA2 in the destination address register 6b is outputted to the address bus 8, and the data DATA 2 of 2 byte, for example, are read out

5

from the memory and inputted to the temporary register 5. Next, the address DATA2 in the second destination address register 7b are outputted, and the data DATA 2 in the temporary register 5 are written in the control register in the timer module 21. Then, the bus & timing control circuit 1 examines the flag FG2 and releases the bus right, if the flag FG2 is in the cleared status "0", to end the transfer. Then, the count data in the transfer count register 3 are decremented (by -1) by the incrementer 4 and are written in the source register 3.

Thus, the data DMAC 100 repeats the data transfer each time the DRQ1, DRQ2 or TIR is inputted. When the value of the transfer count register 3 takes the value "0", the DMAC 100 informs the CPU 10 of it. Then, the CPU 10 rewrites the address data of the address registers 6a and 6b, and 7a and 7b to change the data to be transferred to the I/O device or reset the values of the count register 3 and the control register 2.

The data transfer system, as shown in Fig. 5(B), can be used especially in case pulses having predetermined waveforms are to be outputted from the external terminal of the single-chip microcomputer. In this case, it is deemed that the internal region enclosed by double-dotted lines in Fig. 1 is formed in one semiconductor substrate (or chip) of a single crystal such as silicon and has a wiring line X and an exter nal terminal Y. Although any external terminals other than that Y are not shown, the actual single-chip microcomputer is equipped with a plurality of external terminals other than the terminal Y, as could be easily understood by those skilled in the art.

The method of utilizing the data transfer according to the present invention will be described in the following.

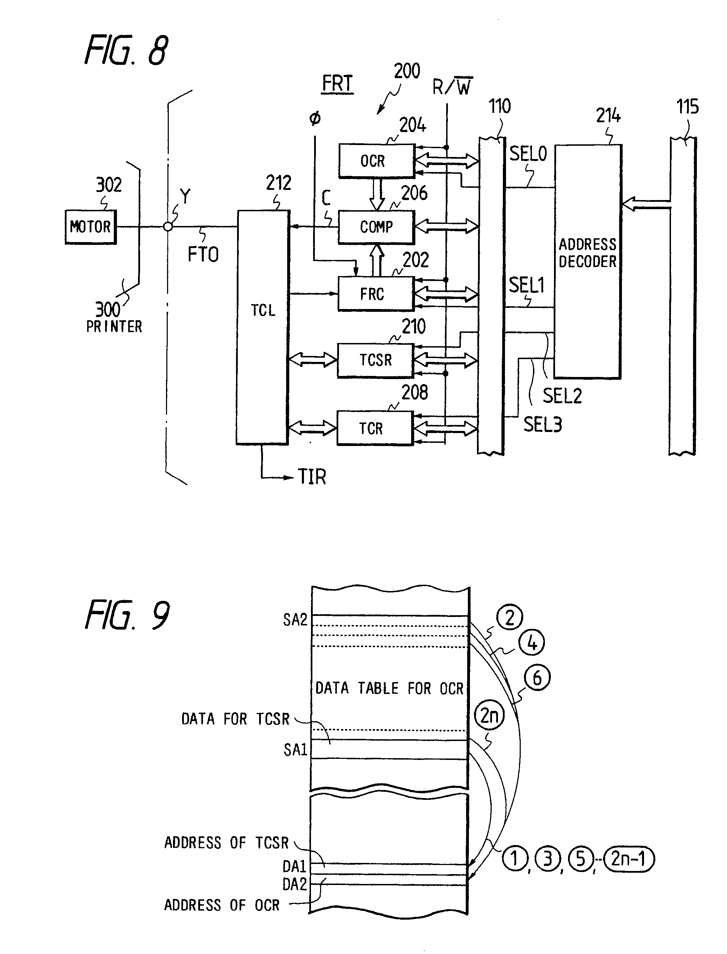

First of all, the timer module includes a free running counter (FRC) 200, as shown in Fig. 8. This FRT includes therein: a free running counter FRC 202 composed of a 16-bit counter for counting the clock number of a clock signal received; an output compare register (OCR) 204 for storing the data to be compared with the count value of the FRC 202; a comparator (COMP) 206 for comparing the values of the FRC and the OCR to output a coincidence signal C when the two values are coincident; a timer control register (TCR) 208 for controlling the operations of the FRT; a timer control/status register (TCSR) 210; and a timer control logic (TCL) 212. The FRC, OCR, TCR and TCSR enumerated above are readable/writable registers, the read and write operations are controlled by the read/write signal (R/W). Moreover, the registers FRC, OCR, TCR and TCSR are linked to the data bus 110 and are alternatively selected by selection signals SEL0 to SEL3 which are outputted from an address decoder 214 for decoding the address signal on the address bus 115.

The TCR includes therein: an output enable flag for designating whether or not the output of an output compare signal is allowed; and an output interrupt enable flag for designating whether or not the output of the timer interrupt request TIR is allowed when the coincidence signal C is issued from the COMP 206. The TCSR 210 includes an output level control flag for designating the output level of the output compare signal FTO in accordance with the coincidence signal C.

The TCL 212 operates to output the FTO signal having an output level designated by the output level control flag, when it receives the coincidence signal C from the COMP 206 while the output compare enable flag is in the set status "1". The FTO signal is set to the low level, when the output level control flag is cleared to "0", and to the high level when the same flag is set to "1". The TCL 212 operates to output the TIR signal at the high level, for example, when it receives the aforementioned coincidence signal C while the output interrupt enable flag is set to "1".

Fig. 8 illustrates a controlled device to be controlled by the FRT, such as a step motor 302 in a printer 300. This example is to control the r.p.m. and/or torque of the motor 302 in accordance with the FTO signal.

Fig. 9 shows the relations among the sequences of the data transfer, the address space of the single-chip microcomputer and the sequences of the data transfer. In this data transfer, the control register 2 and the source and destination address registers 6a, 6b, 7a and 7b in the DMAC 100 are initially set, as enumerated in the following Table 1, so that the data transfers ①- 2 , ③-④ , ⑤-⑥ , - - -, (2n-1)-(2n) are executed each time an timer interrupt (TIR) is inputted to the DMAC:

Table 1

| Register Name | Initial Value | Remarks |
|---|---|---|
| Register 6a | SA1 | Address of Data of TCSR 210 |
| Register 6b | SA2 | Leading Address of Data Table of OCR 204 |
| Register 7a | DA1 | Address of TCSR 210 |
| Register 7b | DA2 | Address of OCR 204 |
| SZ1 | 1 | 1 Byte |
| SI1 | 0 | Fixed Mode |
| DI1 | 0 | Fixed Mode |
| Reg. 2 FG1 | 1 | |
| SZ2 | 1 | 1 Byte |
| SI2 | 1 | Auto-Increment Mode |
| DI2 | 0 | Fixed Mode |
| FG2 | 0 | |
| Register 3 | n | Decimal Notation |

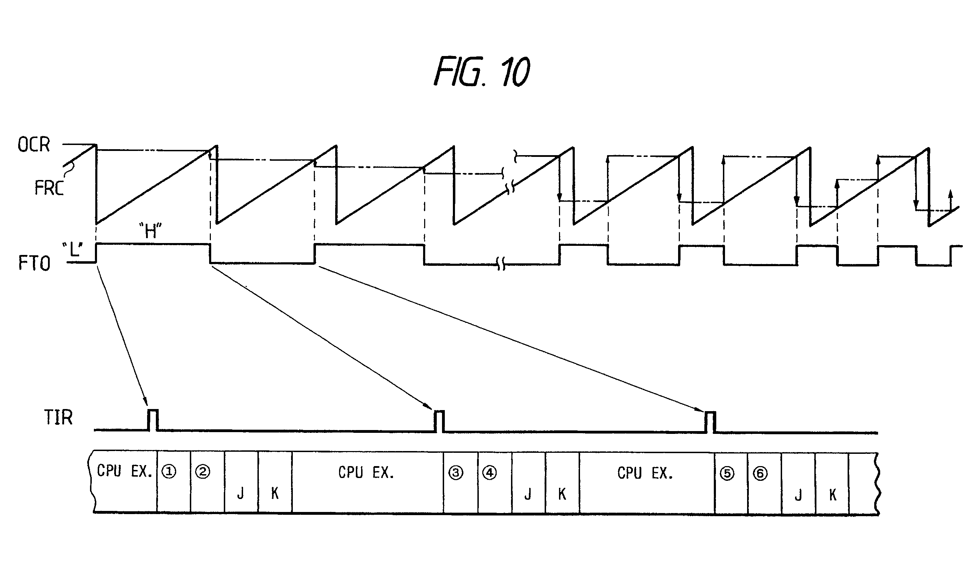

Fig. 10 presents a waveform chart of the data transfer FRT 200 shown in Fig. 9 and a diagram showing the relations among the output levels of the FTO signal.

In Fig. 10: solid lines indicate the count-up status of the FRC 202; double-dotted lines indicate the values of the OCR 204; arrows of the double-dotted lines indicate changes of the values of the OCR 204; broken lines indicate the coincidences of the content of the OCR 204 and the count values of the FRC 202, i.e., the timings outputted from the TIR; and FTO indicate the output level of the FTO signal outputted from the external terminals Y. In order to facilitate the understanding, Fig. 10 illustrates the time distributions of the operation period of the CPU 10 and the data transfer period. The CPU operation period is designated at CPU EX., which indicates that the CPU 10 is executing the data processing program. Numerals ①, ②, and so on indicate the data transfers; letter J indicates the address incrementing operations of the address register 6b; and letter K indicates the decrementing operations of the count register 3.

As a result, the predetermined waveform pulses (FTO) can be outputted from the external terminals Y of the single-chip microcomputer and can have their width changed after having been outputted by a desired number. If, therefore, this operation is utilized for generating the control pulses of the motor 302, this motor 302 can be controlled to gradually accelerate the r.p.m. at first and then to a constant value in its course, as could be easily understood from those skilled in the art.

Incidentally, the embodiment thus far described is equipped with only one control register 2. Despite of this fact, however, a plurality of sets of the control register 2 and the source and destination address registers 6a to 7b may be provided for a corresponding number of channels so that a plurality of independent data transfers can be executed.

Moreover, a transfer count register may be provided in place of or together with the transfer count register 3 so that the transfer count in the block transfer or the like may be incorporated.

Next, here will be described another embodiment in which the present invention is applied to the single-chip microcomputer so that the aforementioned data transfers can be realized by a microprogram.

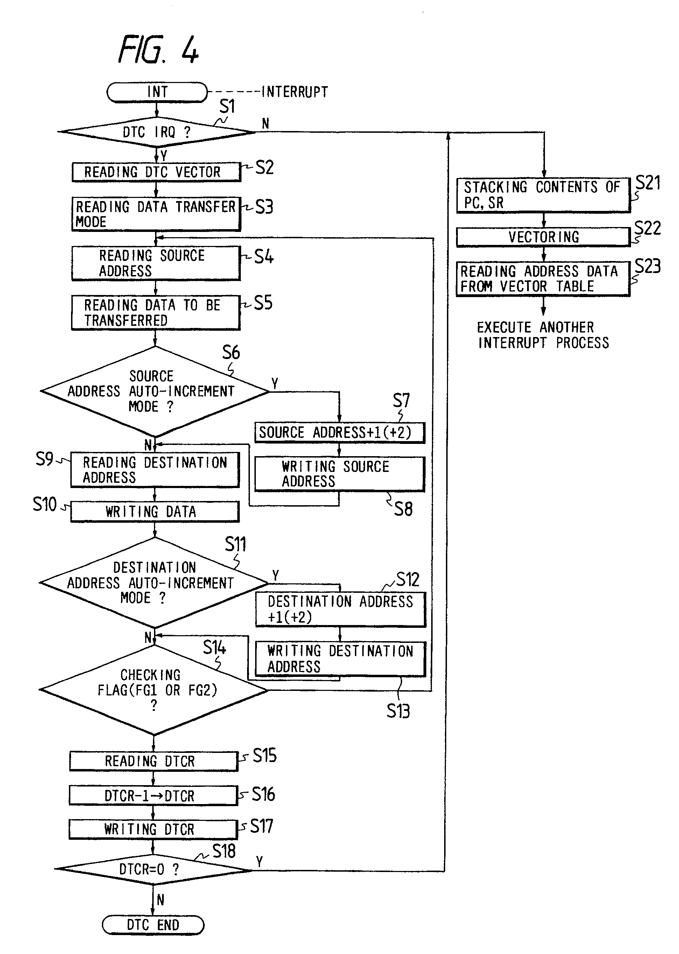

Fig. 3 shows an example of the structure of the single-chip microcomputer to which is applied the present invention, and Fig. 4 shows an example of the control procedure of the microprogram making the data transfers possible between the memory I/O.

In Fig. 3, reference numeral 11 designates a microprocessor which is composed of a control unit of microprogram control type and an execution unit including an arithmetic unit and registers. Numeral 12 designates a programmable packaged timer. Numeral 13 designates a an interrupt controller for determining a priority in response to the timer interrupt TIR or an interrupt request coming from an external device. Numeral 14 designates a bus & timing controller having a bus arbiter to acquire the bus right or to form a control signal to an external device.

Moreover, numeral 15 designates an output port, and numeral 16 designates an address decoder DEC. In this embodiment, the port 15 is equipped with two data registers DR 2 for controlling the output state. These data registers DR1 and DR2 are connected in cascade, and the data register DR1 at the first stage is constructed to read the data from a data bus 19 in response to the control signal coming from the CPU 11 whereas the data register DR2 at the second stage is constructed to fetch the data of the data register DR2 at the first stage in response to a signal CM coming from the timer 12.

In this embodiment, moreover, an external memory (RAM) 20 is connected with an address bus 18 and the data bus 19. To the predetermined address regions of the external memory 20, there are assigned the control register 2, the transfer count register 3, the source address registers 6a and 6b and the destination address registers 7a and 7b, all of which are shown in Fig. 1. Thus, the data transfer between the memory 20 and the I/O is executed according to the microprogram control flow shown in Fig. 4.

Next, the procedures of the case, in which the data are to be transferred from the external memory 20 to the registers of the aforementioned port 15 by the timer interrupt to output predetermined pulses, will be described with reference to the flow chart of Fig. 4.

When the timer interrupt TIR comes from the timer 12 into the interrupt control circuit 13, this circuit sends a bus request signal BR to the bus & timing control circuit 14. This bus & timing control circuit 14 acquires the bus right and outputs an acknowledge signal ACK to the CPU 11. This CPU 11 decides (at step S1) whether the interrupt is one (DTCIRQ) for the data transfer or for another. In case of the data transfer interrupt DTCIRQ, the procedure advances to step S2, at which the corresponding interrupt vector (DTC vector) in the vector region for the data transfer, i.e., the address of the control register 2 in the memory 20 is read by the CPU 11. At the same time, the address is used to access the memory 20 and read (at step S3) the content (e.g., the transfer mode SZ1, SI1 or DI1) of the control register 2. Then, the CPU 11 decodes the size (SZ1) of the data and the transfer modes (SI1 and DI1) to read at first (at step S4) the source address, which is stored at the address assigned to the source address register 6a in the memory 20, and to output the source address to the address bus 18. Then, the CPU 11 accesses the memory 20 to read (at step S5) the data to be transferred. After this, the CPU 11 decides (at step S6) whether or not the source address is to be incremented, from the transfer mode (SI1) read in at the step S3. In case the motor drive pulse is to be outputted from the port 15, the output status has to be inverted for each timer interrupt (TIR). Therefore, the source address is incremented or decremented. In this case, the step is shifted from S6 to S7 so that the source address is incremented by +1 or +2 in response to the size (SZ1) and written (at step S8) in the source address register 6a.

After this, the CPU 11 reads the destination address stored in the destination register 7a of the memory 20 and outputs it to the address bus 18. At this time, the data stored at the step S5 and transferred is outputted to the data bus 19 (at steps S9 and S10). If the destination address outputted to the bus 19 is one for designating the port 15, a select signal SEL1 of the data register DR1 in the port 15 is generated by the decoder 16, and the data on the bus 19 are stored in the data register DR1.

After this, it is decided (at step S11) on the basis of the transfer mode (DI1) read from the control register 2 at the step S3 whether or not the destination address is to be incremented. In case the output port is to be controlled by a timer interrupt, the procedure jumps from the step S11 to step S14 because the destination address is fixed. At the step S14, it is checked whether or not the end flag FG1 in the control register 2 is in the set status "1". If the FG1 is at "1", the procedure returns to the step S4, at which the second transfer is started. In this second transfer, the steps S4 to S14 are repeated to transfer the data for setting the time register (as designated at OCR in Fig. 8 and corresponding to the pulse width) in the timer 12 by using the address registers 6b and 7b in the memory 20. If, in this case, the r.p.m. of the motor is to be changed, the procedure may be shifted from the step S6 to the step S7 to increment the source address. If the r.p.m. is to be held at the constant value, the source address need not be incremented.

If the second data transfer is ended, the end flag FG2 is checked. If the end flag FG2 is in the cleared status "0", the procedure advances to step S15, the content (DTCR) of the transfer count register 3 is read from the memory 20 and decremented (at step S16), and the decremented value is written (at step S17) in the address of the initial register 3. After this, it is decided (at step S18) whether or not the value (i.e., the transfer request count DTCR) of the register 3 is at "0". If the value is not at "0", a next timer interrupt TIR is awaited. If this timer interrupt TIR comes, the aforementioned procedure S1 to S18 is repeated to control the output status of the port 15 in the identical transfer mode.

If, on the contrary, it is decided at the step S18 that the transfer request count is at "0", the procedure is shifted to step S21, at which another interrupt is started. In case the motor drive pulse outputted from the port 15 is to be controlled, the control register 2 can be rewritten by that interrupt process to change the transfer mode.

According to the procedures thus far described, the motor can be controlled so that the pulse width may be gradually enlarged from the start of the motor rotations to the 1,000th pulse to increase the r.p.m. gradually and so that the pulses of a constant width may then be consecutively outputted to make the pulse width, i.e., the r.p.m. constant.

Incidentally, in the single-chip microcomputer according to the embodiment thus far described, the control register 2 and the source and destination address registers 6a to 7b are prepared in the external memory 20. In case, however, the single-chip microcomputer has a packaged RAM, those registers may be prepared in the RAM.

In the embodiment thus far described, there are prepared two sets of address registers capable of setting source addresses and destination addresses, and there is also provided, in the control register prepared for setting the transfer method, both the bit FG1 for discriminating both a transfer mode, in which only one set of the address registers is used, and a transfer mode in which the two sets are used, so that the control signal for the data transfer may be formed while the control code of the control register being decoded. As a result, the individually two source addresses and destination addresses can be set so that two individually independent inter-address data transfers can be executed for one transfer request. Since, moreover, the control register is equipped therein with the bit FG1 for discriminating the once transfer and the twice transfers, there can be attained an effect that it is possible to warrant the function of the DMA controller for a once transfer in response to the conventional once transfer request in addition to the aforementioned twice transfers made newly available.

Although our invention has been specifically described in connection with the embodiments thereof, it should not be limited thereto but can naturally be modified in various manners without departing from the gist thereof. For example, the aforementioned first embodiment has been described imagining the DMA controller formed over a chip which is different from the CPU. Despite of this fact, however, the present invention can also be applied to the DMA controller which is packaged in the single-chip microcomputer.

In the description thus far made, our invention has been described mainly in the application which is made to the DMA controller and the single-chip microcomputer or the background field of utilization of the invention. Despite of this fact, however, our invention should not be limited to that application but can be generally utilized in a semiconductor having a data transfer function.

The effects obtained from the representatives of the invention disclosed herein will be described in the following.

It is possible to provide a DMA controller which can execute the two individually independent inter-address data transfers in response to one transfer request and to control the output pulses of the DMA transfer in the single-chip microcomputer.

## Claims

1. A data transfer method for use in a data processor including: a first source address register (6a) for storing a first source address; a first destination address register (7a) for storing a first destination address; a second source address register (6b) for storing a second source address; a second destination address register (7b) for storing a second destination address; and a transfer count register (3) for storing transfer request count data, comprising the steps of:
   a) executing a data transfer upon reception of a transfer request (TIR), said executing step including the sub-steps of:
      i) transferring first data stored at said first source address in response to reception of said transfer request (TIR);
      ii) transferring second data stored at said source address subsequent to the transfer of said first data to said second destination address; and
      iii) decrementing the transfer request count data stored in said transfer count register (3) by 1 in response to the end of transfer of said second data;
   b) returning to said step (a), if said transfer request count data is not zaro, until said transfer request count data comes to zero; and
   c) ending the data transfer if said transfer request count data is zero.

2. A data transfer control device comprising:
   first storage means (6a) for storing a first source address;
   second storage means (7a) for storing a first destination address;
   third storage means (6b) for storing a second source address;
   fourth storage means (7b) for storing a second destination address;
   fifth storage means (3) for storing transfer request count data; and
   control storage means (2) for controlling a data transfer, said control storage means (2) including: first control bits (SZ1, SI1 and DI1) for controlling a first data transfer using said first and second storage means; second control bits (SZ2, SI2 and DI2) for controlling a second data transfer using said third and fourth storage means; and a third control bit (FG1) having both a clear state indicating that said first data transfer is repeatedly executed and a set state indicating that said first and second data transfers are consecutively

9

executed,

wherein, when said control bit (FG1) is in said clear state, said first data transfer is executed by a number indicated by said transfer request count data, and

wherein, when said control bit (FG1) is in said set state, the data transfer defining the consecutive transfers of said first and second data transfers is executed by a number indicated by said transfer request count data.

3. A data transfer control device according to Claim 2, wherein, when said control bit (FG1) is in said clear state, said transfer request count data are decremented by 1 after said first data transfer has been executed, and

wherein, when said control bit (FG1) is in said set state, said transfer request count data are decremented by 1 after said first and second data transfers have been consecutively executed.

4. A data transfer control device according to Claim 3, wherein said data transfer control device is included in a single-chip data processor.

FIG. 1

INCREMENTER ~4

DMAC —100

CONTROL REGISTER 2  TRANSFER COUNT REGISTER 3  TEMPORARY REGISTER 5  R/W̄  MEMORY 20  I/O 30

DRQ2

DATA BUS 9  SDB  115

ADDRESS BUS 8  SAB  110

SOURCE ADDRESS REGISTER 1  6a
SOURCE ADDRESS REGISTER 2  6b
DESTINATION ADDRESS REGISTER 1  7a
DESTINATION ADDRESS REGISTER 2  7b

DRQ1

BUS & TIMING CONTROL CIRCUIT 1  CNT  CPU 10  TIMER MODULE 21

DACK

TIR

X

Y

EP 0 428 111 A2

# FIG. 2

| 15 | 14 | 13 | 12 | 11 | 10 | 9 | 8 | 7 | 6 | 5 | 1 | 0 |
|----|----|----|----|----|----|----|----|----|----|----|----|----|
| SZ1 | SI1 | DI1 | FG1 | SZ2 | SI2 | DI2 | FG2 | — | — | — | — | — |

CONTROL REGISTER 2

# FIG. 3

12

# FIG. 4

INT ------ INTERRUPT

S1 — DTC IRQ ?  — N

Y

S2 — READING DTC VECTOR

S3 — READING DATA TRANSFER MODE

S4 — READING SOURCE ADDRESS

S5 — READING DATA TO BE TRANSFERRED

S6 — SOURCE ADDRESS AUTO-INCREMENT MODE ? — Y

S7 — SOURCE ADDRESS+1(+2)

S8 — WRITING SOURCE ADDRESS

N

S9 — READING DESTINATION ADDRESS

S10 — WRITING DATA

S11 — DESTINATION ADDRESS AUTO-INCREMENT MODE ? — Y

S12 — DESTINATION ADDRESS +1(+2)

S13 — WRITING DESTINATION ADDRESS

N

S14 — CHECKING FLAG(FG1 OR FG2) ?

S15 — READING DTCR

S16 — DTCR-1→DTCR

S17 — WRITING DTCR

S18 — DTCR=0 ? — Y

N

DTC END

S21 — STACKING CONTENTS OF PC, SR

S22 — VECTORING

S23 — READING ADDRESS DATA FROM VECTOR TABLE

EXECUTE ANOTHER INTERRUPT PROCESS

13

## FIG. 5(A)

SA1→ | DATA 1

DA2→

## FIG. 5(B)

SA1→ | DATA 1

SA2→ | DATA 2

DA2→

DA1→

# FIG. 6

```
┌──────────────┐ ┐
│ DATA TRANSFER│ │
│ START        │ │
└──────────────┘ │
       ↓         ├ A
┌──────────────┐ │
│ DATA TRANSFER│ │
│ COMPLETION   │ │
└──────────────┘ ┘
       ↓
┌──────────────┐
│ DECREMENT OF │
│ DATA IN THE  │
│ REGISTER 3   │
└──────────────┘
       ↓
┌──────────────┐ ┐
│ DATA TRANSFER│ │
│ START        │ │
└──────────────┘ │
       ↓         ├ A
┌──────────────┐ │
│ DATA TRANSFER│ │
│ COMPLETION   │ │
└──────────────┘ ┘
       ↓
┌──────────────┐
│ DECREMENT OF │
│ THE DATA IN  │
│ THE REGISTER 3│
└──────────────┘
       ⋮
```

# FIG. 7

```
┌──────────────┐ ┐
│ DATA TRANSFER│ │
│ START        │ │
└──────────────┘ │
       ↓         ├ A
┌──────────────┐ │
│ DATA TRANSFER│ │
│ COMPLETION   │ │
└──────────────┘ ┘
       ↓
┌──────────────┐ ┐
│ DATA TRANSFER│ │
│ START        │ │
└──────────────┘ │
       ↓         ├ B
┌──────────────┐ │
│ DATA TRANSFER│ │
│ COMPLETION   │ │
└──────────────┘ ┘
       ↓
┌──────────────┐
│ DECREMENT OF │
│ THE DATA IN  │
│ THE REGISTER 3│
└──────────────┘
       ↓
┌──────────────┐ ┐
│ DATA TRANSFER│ │
│ START        │ │
└──────────────┘ │
       ↓         ├ A
┌──────────────┐ │
│ DATA TRANSFER│ │
│ COMPLETION   │ │
└──────────────┘ ┘
       ↓
┌──────────────┐ ┐
│ DATA TRANSFER│ │
│ START        │ │
└──────────────┘ │
       ↓         ├ B
┌──────────────┐ │
│ DATA TRANSFER│ │
│ COMPLETION   │ │
└──────────────┘ ┘
       ↓
┌──────────────┐
│ DECREMENT OF │
│ THE DATA IN  │
│ THE REGISTER 3│
└──────────────┘
       ⋮
```

FIG. 8

FIG. 9

# FIG. 10

EP 0 428 111 A2